# EUROPÄISCHE PATENTSCHRIFT

(11) **EP 1 985 887 B1**
(45) Veröffentlichungstag und Bekanntmachung des Hinweises auf die Patenterteilung: **09.01.2013**
(21) Anmeldenummer: 08007701.9
(22) Anmeldetag: 21.04.2008
(51) Int. Cl.: F16F 9/46, F16F 9/512

(54) **Frequenzabhängiger Schwingungsdämpfer**
Frequency-dependant vibration damper
Amortisseur d'oscillations dépendant de la fréquence

(30) Priorität: 24.04.2007 DE 102007019621
(43) Veröffentlichungstag der Anmeldung: 29.10.2008
(73) Patentinhaber: Hölscher, Reinhard, 33154 Salzkotten (DE)
(72) Erfinder: Hölscher, Reinhard, 33254 Salzkotten (DE); Kienemind, Albrecht, 46119 Oberhausen (DE); Will, Wilhelm, 44532 Lünen (DE)
(74) Vertreter: Lenzing Gerber Stute

(56) Entgegenhaltungen:
- EP-B1- 1 442 227
- US-A- 5 467 852

## Beschreibung

Die vorliegende Erfindung betrifft einen Schwingungsdämpfer mit den Merkmalen des Oberbegriffs des Anspruchs 1.

Ein solcher Schwingungsdämpfer, der im Bereich der Kraftfahrzeugtechnik im Allgemeinen als Stoßdämpfer bezeichnet wird, ist aus der europäischen Patentschrift EP 1442227 B1 bekannt.

Schwingungsdämpfer bestehen im Allgemeinen aus einem Zylinder mit einem darin bewegbaren Kolben, wobei der Zylinder an einem ersten Teil eines Kraftfahrzeugs befestigt ist. Der Kolben ist über eine Kolbenstange an einem zweiten, relativ zu dem ersten Teil bewegbaren Fahrzeugteil befestigt. Der Kolben teilt den Innenraum des Zylinders in zwei Kammern auf. Bei einer Bewegung des Kolbens strömt eine Flüssigkeit (Dämpferöl) von einer Kammer in die andere Kammer. Der Strömungswiderstand führt dazu, dass Energie verzehrt wird. Diese Energie wird dem schwingenden oder schwingungsfähigen System entzogen und dämpft damit eine mögliche Schwingung.

Die Dämpfercharakteristik ist bei Kraftfahrzeugen ein wesentlicher Faktor für den Fahrkomfort und das Fahrverhalten. So sind komfortabel ausgerichtete Fahrwerke eher gering bedämpft, während sportlich ausgerichtete Fahrwerke stärker bedämpft sind.

Eine durch die Viskosität des Dämpferöls und die geometrischen Gegebenheiten fest vorgegebene Dämpfung ist in vielen Fällen nicht geeignet, um alle Fahrzustände und alle Anregungen des Fahrwerks in geeigneter Weise zu bedämpfen. So ist es zum Beispiel erwünscht, niederfrequente Einflüsse bei Roll- und Nickbewegungen stärker zu bedämpfen, als hochfrequente Einflüsse, die von Fahrbahnunebenheiten stammen. Zu diesem Zweck ist eine frequenzabhängige Dämpfung vorteilhaft.

In der oben genannten europäischen Patentschrift, die den nächstkommenden Stand der Technik darstellt, wird dieses Problem durch ein Ventil gelöst, welches sich in dem Dämpferkolben befindet. Das Ventil wird über die Druckdifferenz zwischen einer Dämpferkammer und einer Hilfskammer vorgespannt. Der Druck in der Hilfskammer baut sich bei Bewegung des Dämpferkolbens in einer Bewegungsrichtung auf. Bei hochfrequenten Anregungen kehrt sich jedoch die Bewegungsrichtung des Kolbens mit hoher Frequenz um. Aufgrund der Viskosität der Dämpferflüssigkeit kann sich in den kurzen Zeiten, in denen die Bewegung in die erforderliche Richtung verläuft, kein hoher Druck in der Hilfskammer aufbauen. Die Dämpfung bei hohen Frequenzen ist deshalb, wie gewünscht, geringer als bei niedrigen Anregungsfrequenzen.

Gegenüber diesem Stand der Technik soll mit der vorliegenden Erfindung die Aufgabe gelöst werden, einen Schwingungsdämpfer mit frequenzabhängiger Dämpfung zu schaffen, der in beiden Bewegungsrichtungen frequenzabhängig wirkt. Es ist weiter Aufgabe der vorliegenden Erfindung, einen Schwingungsdämpfer mit relativ einfachem Aufbau zu schaffen, der eine elektronische Beeinflussung der Dämpfungswerte erlaubt.

Diese Aufgabe wird von einem Schwingungsdämpfer mit den Merkmalen des Anspruchs 1 gelöst.

Weil die erste Arbeitskammer von einem in dem Ventilgehäuse verschieblich gelagerten Kolben begrenzt ist, der mit dem Ventilgehäuse eine von der ersten Arbeitskammer hydraulisch getrennte und mit der zweiten Arbeitskammer hydraulisch verbundene Hilfskammer begrenzt und der mit dem Ventilglied verbunden ist, um das Ventilglied in Richtung auf den Ventilsitz zu drängen, wenn der Druck in der ersten Arbeitskammer größer ist als der Druck in der zweiten Arbeitskammer, kann die Dämpfungswirkung bei niedrigen Anregungsfrequenzen groß und bei hohen Anregungsfrequenzen klein gewählt werden. Die Anordnung ist dabei relativ einfach aufgebaut.

Vorteilhafte Weiterbildungen der Erfindung sind Gegenstand der abhängigen Patentansprüche.

Wenn der Kolben ein Rohr trägt, das eine hydraulische Verbindung der Hilfskammer mit der zweiten Arbeitskammer darstellt und das dazu eingerichtet ist, eine Zugkraft auf das Ventilglied zu übertragen, können beide Funktionen in einem einfachen Bauelement integriert werden. Wenn der Hub des Kolbens durch einstellbare Begrenzungsmittel begrenzt ist, können die minimale und die maximale Dämpfungswirkung eingestellt werden. Dabei kann eine elektronische Beeinflussung erfolgen, wenn wenigstens ein Begrenzungsmittel einen von einem elektromechanischen Aktuator betätigbaren Anschlagkörper umfasst.

Der Aufbau und vor allem die Einstellung der Dämpfung wird vereinfacht, wenn die Dämpfungsventilanordnung außerhalb des Gehäuses angeordnet ist. Weiter wird die geometrische Form dadurch variabel, so dass der zur Verfügung stehende Bauraum in einem Kraftfahrzeug besser ausgenutzt werden kann.

Das Dämpfungsventil kann nahezu beliebig angeordnet werden, insbesondere bei einem Einsatz als Kraftfahrzeugstoßdämpfer, wenn die Dämpfungsventilanordnung über Hydraulikleitungen mit den Volumina des Schwingungsdämpers verbunden ist.

Wenn insgesamt zwei Dämpfungsventilanordnungen vorgesehen sind, die hydraulisch parallel und strömungsmäßig gegensinnig angeordnet sind, können beide Dämpfungsrichtungen separat nach Dämpfung und Frequenzabhängigkeit eingestellt werden. Bewegungen des Kolbens mit geringer Amplitude und Geschwindigkeit können vorteilhaft ermöglicht werden, wenn der Kolben eine Bypassbohrung zur hydraulischen Verbindung der Volumina ohne Ventilmittel aufweist.

Besonders einfach und funktionssicher ist es, wenn die Dämpfungsventilanordnung im wesentlichen rotationssymmetrisch aufgebaut ist und wenn das Rohr und vorzugsweise auch das Ventil mit der Symmetrieachse koaxial angeordnet ist.

Vorzugsweise ist das bewegliche Ventilglied von wenigstens einer Federplatte, insbesondere von einem Plattenpaket gebildet.

Die Frequenzabhängigkeit wird positiv beeinflusst, wenn der Kolben einen größeren Durchmesser aufweist als das Ventilglied.

Das hydraulische Dämpfungsfluid kann besonders beim Einsatz im Motorsport wirksam gekühlt werden, wenn die Dämpfungsventilanordnung eine Kühlvorrichtung trägt, denn das Hydraulikfluid wird durch die Einwegwirkung des Dämpfungsventils bei Bewegungen zwangsweise durch die Dämpfungsventilanordnung gepumpt und kann dabei gekühlt werden.

Wenn der Anschlagkörper derart ausgebildet ist, dass er mit dem Rohr als Dämpfungsventil zusammenwirkt, kann eine Endlagendämpfung durch Eindringen des Anschlagkörpers in die Öffnung des Rohres erzielt werden.

Nachfolgend wird ein Ausführungsbeispiel der vorliegenden Erfindung anhand der Zeichnung näher beschrieben. Es zeigen:
- Figur 1:: einen erfindungsgemäßen Schwingungsdämpfer in einer Prinzipdarstellung; und
- Figur 2:: einen Schwingungsdämpfer mit zwei externen Ventilen.

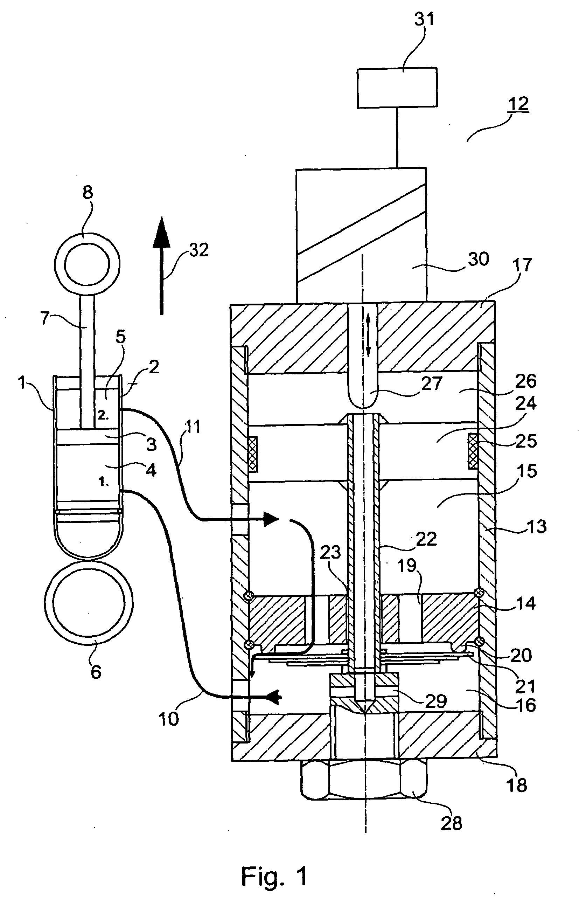

Die Figur 1 zeigt in einer schematischen Darstellung einen Schwingungsdämpfer oder Stossdämpfer 1 mit einem zylindrischen Gehäuse 2, in dem ein Kolben 3 in Axialrichtung des Gehäuses bewegbar gelagert ist. Der Kolben 3 ist in dem zylindrischen Gehäuse 2 dichtend angeordnet. Das Gehäuse 2 und der Kolben 3 begrenzen einen erstes Volumen 4 unterhalb des Kolbens und ein zweites Volumen 5 oberhalb des Kolbens 3. Das Gehäuse 2 weist an seiner Unterseite ein Befestigungsauge 6 auf. Der Kolben 3 trägt eine Kolbenstange 7, die an ihrem dem Kolben 3 gegenüberliegenden Ende ein zweites Befestigungsauge 8 aufweist. Mit den Befestigungsaugen 6 und 8 wird der Stossdämpfer 1 zum Beispiel an der Karosserie und einem Achsteil eines Kraftfahrzeugs befestigt.

Das erste Volumen 4 und das zweite Volumen 5 sind über Hydraulikleitungen 10 bzw. 11 mit einem außerhalb des Gehäuses angeordneten Dämpfungsventil verbunden. Das Dämpfungsventil ist insgesamt mit 12 bezeichnet und im Verhältnis zu dem Stossdämpfer 1 vergrößert dargestellt.

Das Dämpfungsventil 12 umfasst ein zylindrisches Ventilgehäuse 13, das von einer Trennwand 14 in eine obere erste Arbeitskammer 15 und eine untere zweite Arbeitskammer 16 aufgeteilt wird. Die Arbeitskammer 15 ist über die Hydraulikleitung 11 mit dem ersten Arbeitsraum 5 des Stoßdämpfers 1 verbunden. Die Arbeitskammer 16 ist über die Hydraulikleitung 10 mit dem Arbeitsraum 4 des Stossdämpfers 1 verbunden. Das zylindrische Gehäuse 13 ist an der Oberseite durch eine Deckplatte 17 verschlossen. An der Unterseite ist eine zweite Deckplatte 18 vorgesehen, die das Gehäuse 13 und insbesondere die zweite Kammer 16 nach unten verschließt.

Die erste Arbeitsammer 15 und die zweite Arbeitskammer 16 sind über Bohrungen 19 in der Platte 14 strömungsmäßig mit einander verbunden. Die Bohrungen 19 weisen einen relativ großen Bohrungsdurchmesser auf, so dass sie nicht oder nur geringfügig dämpfend wirken. Die Platte 14 trägt an ihrer der zweiten Kammer 16 zugewandten Seite eine ringförmig umlaufende Wulst 20. An dieser Wulst 20 liegt ein Plattenpaket 21 an und bildet mit der Wulst 20 zusammen ein Einwegeventil, das von der ersten Kammer 15 in Richtung der zweiten Kammer 16 entgegen der Federkraft des Plattenpakets 21 durchströmt werden kann, in der Gegenrichtung aber abdichtet.

Das Plattenpaket 21 besteht aus kreisrunden Federscheiben unterschiedlichen Durchmessers. Die Federscheibe mit dem größten Durchmesser ist der Wulst 20 zugewandt. Die Scheiben weisen eine mittige Bohrung auf, in die ein Rohr 22 eingesetzt ist. Das Plattenpaket 21 ist durch Sicherungselemente in Axialrichtung des Rohres 22 unverschiedlich an dem Rohr 22 befestigt. Das Rohr 22 durchsetzt ausgehend von dem Plattenpaket 21 zunächst die Platte 14 im Bereich einer zentrisch angebrachten Bohrung 23 der Platte 14. Das Rohr 22 verläuft dann durch die erste Arbeitskammer 15 und trägt einen fest mit dem Rohr 22 verbundenen Kolben 24, der gegenüber dem zylindrischen Ventilgehäuse 13 im Bereich einer Dichtung 25 abgedichtet, aber in Axialrichtung der Anordnung verschieblich gelagert ist. Der Kolben 24 begrenzt die erste Kammer 15. Der Kolben 24 begrenzt weiter zusammen mit der ersten Deckplatte 17 und dem zylindrischen Ventilgehäuse 13 eine Hilfskammer 26. In Axialrichtung des Rohres 22 ist konzentrisch ein Anschlagkörper 27 in der ersten Platte 17 angeordnet. Dieser Anschlagkörper 27 begrenzt den Weg des Rohres 22 in Axialrichtung auf die erste Platte 17 zu.

Gegenüber trägt die zweite Platte 18 eine Anschlagschraube 28, die den Weg des Rohres 22 in Axialrichtung auf die Platte 18 zu begrenzt. Die Anschlagschraube 28 weist eine Radialbohrung und eine Axialbohrung auf, die insgesamt als Bohrungen 29 bezeichnet sind. Die Bohrungen 29 bewirken eine hydraulische Verbindung zwischen der zweiten Arbeitskammer 16, dem Innenraum des Rohres 22 und der Hilfskammer 26.

Schließlich ist bei diesem Ausführungsbeispiel noch ein elektromechanischer Aktuator 30 an der Außenseite der ersten Platte 17 vorgesehen, der zur Verstellung des Anschlagkörpers 27 in Axialrichtung in Abhängigkeit von einer elektronischen Steuerung 31 eingerichtet ist.

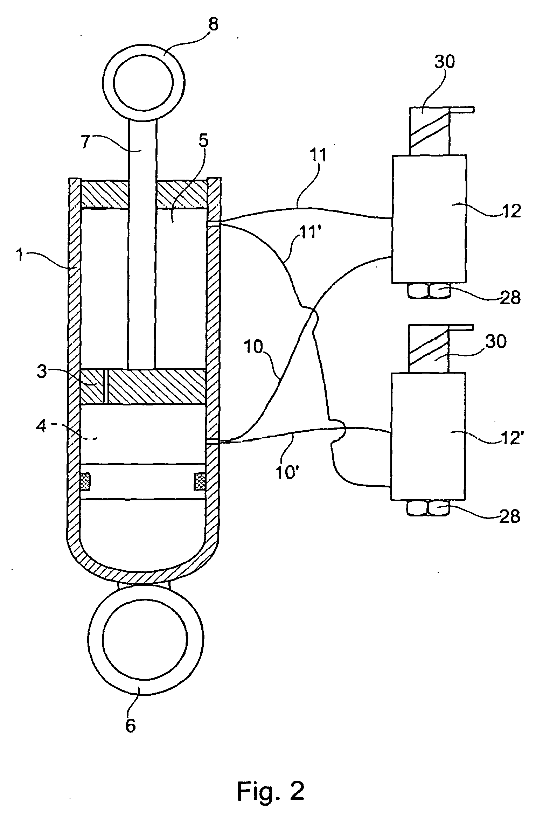

Die Figur 2 zeigt nur schematisch einen Schwingungsdämper mit zwei Dämpfungsventilen 12 und 12', die 'parallel zueinander über Hydraulikleitungen 10 und 11 bzw. 10' und 11' an dem Schwingungsdämper angeschlossen sind. Die Ventile 12 und 12' sind so angeschlossen, dass in einer Bewegungsrichtung das Ventil 12 durchströmt wird und in der entgegengesetzten Richtung das andere Ventil 12' durchströmt wird. Ein Ventil ist dann zur Bedämpfung der Zugstufe eingerichtet, das andere zur Bedämpfung der Druckstufe. Der innere Aufbau der Ventile ist im wesentlichen gleich.

In der Praxis arbeitet das insoweit beschriebene Dämpfungsventil 12 wie folgt:

Wenn die Befestigungsaugen 6 und 8 von einander entfernt werden, was durch den Richtungspfeil 32 in der Figur 1 angedeutet wird, wird das zweite Volumen 5 verringert. Das verdrängte Hydraulikfluid strömt durch die Hydraulikleitung 11 in die erste Kammer 15. Dort wird es durch die Dämpfungsventilanordnung, bestehend aus der Wulst 20 und dem Plattenpaket 21, in die zweite Kammer 16 gedrängt und verlässt diese Kammer durch die Hydraulikleitung 10, um die Volumenvergrößerung des ersten Volumens 4 auszugleichen. Die Dämpfungsventilanordnung, bestehend aus der Wulst 20 und dem Plattenpaket 21, setzt der Strömung einen Widerstand entgegen, der zu der gewünschten Dämpfung führt. Das Plattenpaket 21 ist gegen die Wulst 20 vorgespannt. Die Vorspannung ist durch die Anschlagschraube 28 einstellbar.

Bei dieser Bewegung entsteht in der ersten Kammer 15 ein Druck, der zu einer Axialkraft auf den Kolben 24 führt. Der Kolben 24 wird dadurch in Richtung der Hilfskammer 26 und damit auf den Anschlagkörper 27 zu verlagert. Das Rohr 22 ermöglicht den Ausgleich des aus der Hilfskammer 26 verdrängten Hydraulikfluids durch die Bohrungen 29 in die zweite Kammer 16. Der Druck in der Hilfskammer 26 und in der zweiten Kammer 16 ist im Wesentlichen gleich und geringer als in der ersten Kammer 15. Der Kolben 24 bewegt sich aufgrund dieser Druckdifferenz solange auf den Anschlagkörper 27 zu, bis er den Anschlagkörper 27 erreicht oder bis ein Kräftegleichgewicht zwischen den aus der Druckdifferenz erzeugten Kräften und der Rückstellkraft des Plattenpakets 21 erreicht ist.

Durch die beschriebene Bewegung des Kolbens 24 auf den Anschlagkörper 27 zu wird das Plattenpaket 21 gegen die Wulst 20 gedrängt. Die Dämpfungswirkung der Ventilanordnung 20, 21 nimmt deshalb zu. Wenn die Druckdifferenz nachlässt, kehrt die Anordnung durch die Rückstellkraft des Plattenpakets 21 in die Ausgangsstellung zurück.

Diese Betrachtung ist bei langsamen Bewegungen in Richtung des Pfeils 32 zutreffend. Eine Bewegung des Schwingungsdämpfers in der Gegenrichtung, bei der sich die Befestigungsaugen 6 und 8 einander annähern, führt zu einer Strömungsumkehr in den Leitungen 10 und 11. Diese ist bei der beschriebenen Anordnung nicht möglich. Es ist deshalb erforderlich, ein zweites Dämpfungsventil vorzusehen. Dies kann je nach angestrebter Anwendung entweder in dem Kolben 3 selbst vorgesehen sein, oder es kann wie in Figur 2 dargestellt ein externes Dämpfungsventil vorgesehen sein, das in Gegenrichtung zu dem beschriebenen Ventil 12 parallel geschaltet ist. Insbesondere kann das zweite, in der Figur 1 nicht dargestellte, Ventil baugleich mit dem Ventil 12 sein.

Während bei der beschriebenen langsamen Bewegung aufgrund der entstehenden Druckverhältnisse die Federkraft am Plattenpaket 21 zunimmt und die Dämpfungswirkung deshalb vergrößert wird, muss auch ein Bereich hochfrequenter Schwingungen betrachtet werden. Hochfrequente Schwingungen, wie sie in einem Kraftfahrzeug durch unebene Fahrbahnen, Unwuchten oder Umrundheiten der Räder oder der Reifen entstehen, führen zu hochfrequenten Druckschwankungen in der ersten Kammer 15 und der zweiten Kammer 16. Eine solche hochfrequente Druckschwankung ist dadurch gekennzeichnet, dass der erhöhte Druck in der Kammer 15 nur für kurze Zeit besteht, bevor sich die Druckverhältnisse umkehren. Diese Zeit reicht dann nicht aus, um das für eine Verkleinerung der Hilfskammer 26 erforderliche Volumen an Hydraulikflüssigkeit in die zweite Kammer 16 strömen zu lassen. Bei solchen hochfrequenten Anregungen ist deshalb allenfalls eine ebenso hochfrequente Schwingung des Kolbens 24, des Rohres 22 und des Plattenpakets 21 um die in der Figur dargestellte Ausgangslage zu erwarten. Für die Dämpfungswirkung bedeutet dies, dass das Plattenpaket 21 nicht oder nicht wesentlich durch den Kolben 24 vorgespannt wird, sondern dass die Lage des Plattenpakets 21 durch die Lage der Anschlagschraube 28 definiert ist. Diese Lage entspricht einer geringeren Anlagekraft des Plattenpakets 21 an der Wulst 20 und damit einer geringeren Dämpfungswirkung.

Die Anordnung ist also in der Lage, bei hochfrequenten Anregungen eine geringere Dämpfungswirkung zu gewährleisten, als bei niederfrequenten Anregungen.

Eine Einstellmöglichkeit im Sinne einer externen elektronischen Beeinflussung des Dämpfers ist durch den Aktuator 30 und Anschlagkörper 27 möglich. So kann beispielsweise im Betrieb eine Steuerung 31 den Aktuator 30 geschwindigkeitsabhängig ansteuern. Beispielsweise kann vorgesehen sein, dass der Anschlagkörper 27 bei niedrigen Geschwindigkeiten auf das Rohr 22 zu bewegt wird und die Bewegung des Rohres 22 und des Kolbens 24 begrenzt oder ganz unterbindet. Damit wäre für niedrige Geschwindigkeiten die Dämpfungswirkung über den gesamten Frequenzbereich gleich. Bei höheren Geschwindigkeiten kann dann der Aktuator 30 so angesteuert werden, dass der Anschlagkörper 27 von dem Rohr 22 wegbewegt wird, so dass niederfrequente Anregungen beispielsweise durch Roll- und Nickbewegungen stärker bedämpft werden, als hochfrequente Anregungen.

Beim Einsatz nur eines Ventils 12, wie dies in der Figur dargestellt ist, kann die frequenzabhängige Dämpfung entweder für das Einfedern oder für das Ausfedern eingesetzt werden. Für die entgegengesetzte Bewegung des Stossdämpfers 1 kann dann ein konventionelles Dämpfungsventil vorgesehen werden. Wenn zwei Ventilanordnungen 12 zu einander parallel und in der Strömungsrichtung gegeneinander geschaltet werden, so kann die Dämpfung beim Einfedern unabhängig von der Dämpfung beim Ausfedern variiert werden. Insbesondere kann dann auch die Grunddämpfung, die über die Anschlagschraube 28 eingestellt wird, für die beiden Dämpfungsrichtungen separat vorgewählt werden.

Eine einfachere Ausführungsform sieht vor, dass statt des Aktuators 30 und des Anschlagkörpers 27 hier ebenfalls eine Anschlagschraube vorgesehen ist, so dass auch die maximal mögliche Dämpfung statisch über die Schraube einstellbar ist.

Es kann in der Praxis noch vorteilhaft sein, in dem Kolben 3 eine kleine Ausgleichbohrung vorzusehen, die das erste Volumen 4 und das zweite Volumen 5 mit einander verbindet. Wenn eine solche Ausgleichsbohrung zur Verfügung steht, können sehr kleine Anregungen mit geringer Anstiegszeit und geringer Amplitude unmittelbar ausgeglichen werden, ohne dass die gesamte Dämpferölmenge in den Hydraulikleitungen 10 und 11 und in dem Ventil 12 bewegt wird. Eine solche Ausgleichsbohrung steigcrt das Komfortempfinden bei niedrigen Geschwindigkeiten, den sogenannten Abrollkomfort.

Eine bevorzugte Anwendung des insoweit beschriebenen Stoßdämpfers, insbesondere mit zwei gegeneinander parallel geschalteten Ventilanordnungen, ist im Motorsport gegeben. Die geringe Dämpfung bei hohen Frequenzen ermöglicht einen verbesserten Bodenkontakt der Räder und damit eine erhöhte Traktion und erhöhte Kurvengeschwindigkeiten sowie ein besseres Bremsverhalten. Die höhere Dämpfung bei niederfrequenten Anregungen hingegen stabilisiert das Fahrzeug relativ zur Fahrbahnoberfläche und vermeidet dadurch nachteilige Einflüsse auf die Aerodynamik.

Weitere Anwendungsmöglichkeiten für die beschriebene Schwingungsdämpferanordnung bestehen auch bei Straßenfahrzeugen, bei denen die Nick- und Rollbewegungen der Karosserie minimiert werden sollen, aber der Federungskomfort gegenüber Straßenunebenheiten nicht beeinträchtigt werden soll.

### Bezugszeichenliste

- 1.: Stoßdämpfer
- 2.: zylindrisches Gehäuse
- 3.: Kolben
- 4.: erstes Volumen
- 5.: zweites Volumen
- 6.: Befestigungsauge
- 7.: Kolbenstange
- 8.: Befestigungsauge
- 9.: -
- 10.: Hydraulikleitung
- 11.: Hydraulikleitung
- 12.: Dämpfungsventil
- 13.: zylindrisches Ventilgehäuse
- 14.: Trennwand
- 15.: erste Arbeitskammer
- 16.: zweite Arbeitskammer
- 17.: erste Deckplatte
- 18.: zweite Deckplatte
- 19.: Bohrung
- 20.: Wulst
- 21.: Plattenpaket

- 22.: Rohr
- 23.: Bohrung
- 24.: Kolben
- 25.: Dichtung
- 26.: Hilfskammer
- 27.: Anschlagkörper
- 28.: Anschlagschraube
- 29.: Bohrungen
- 30.: elektromechanischer Aktuator
- 31.: elektronische Steuerung
- 32.: Richtungspfeil

## Patentansprüche

1. Schwingungsdämper
- mit einem zylindrischen Gehäuse (2) und einem in dem Gehäuse (2) verschieblichen Kolben (3), wobei das Gehäuse (2) und der Kolben (3) jeweils mit Befestigungsmitteln (6, 8) versehen sind, und wobei der Kolben (3) in dem Gehäuse (2) dichtend eingesetzt ist und ein erstes Volumen (4) und ein zweites Volumen (5) begrenzt, und
- mit wenigstens einer Dämpfungsventilanordnung (12), die in einem Ventilgehäuse (13) eine mit dem zweiten Volumen (5) hydraulisch kommunizierende erste Arbeitskammer (15) und eine mit dem ersten Volumen (4) kommunizierende zweite Arbeitskammer (16) sowie ein strömungsmäßig zwischen der ersten Arbeitskammer (15) und der zweiten Arbeitskammer (16) angeordnetes Dämpfungsventil (20, 21) umfasst, wobei das Dämpfungsventil (20, 21) einen Ventilsitz (20) und ein bewegbares Ventilglied (21) umfasst, das den hydraulischen Strom von der ersten Arbeitskammer (15) in die zweite Arbeitskammer (16) beeinflusst, **dadurch gekennzeichnet, dass** die erste Arbeitskammer (15) von einem in dem Ventilgehäuse (13) verschieblich gelagerten Kolben (24) begrenzt ist, der mit dem Ventilgehäuse (13) eine von der ersten Arbeitskammer (15) hydraulisch getrennte und mit der zweiten Arbeitskammer (16) hydraulisch verbundene Hilfskammer (26) begrenzt und der mit dem Ventilglied (21) verbunden ist, um das Ventilglied (21) in Richtung auf den Ventilsitz (20) zu drängen, wenn der Druck in der ersten Arbeitskammer (15) größer ist als der Druck in der zweiten Arbeitskammer (16).

2. Vorrichtung nach Anspruch 1, **dadurch gekennzeichnet, dass** der Kolben (24) ein Rohr (22) trägt, das eine hydraulische Verbindung der Hilfskammer (26) mit der zweiten Arbeitskammer (16) darstellt und das dazu eingerichtet ist, eine Zugkraft auf das Ventilglied (21) zu übertragen.

3. Vorrichtung nach einem der vorhergehenden Ansprüche, **dadurch gekennzeichnet, dass** der Hub des Kolbens (24) durch einstellbare Begrenzungsmittel (27, 28) begrenzt ist.

4. Vorrichtung nach einem der vorhergehenden Ansprüche, **dadurch gekennzeichnet, dass** wenigstens ein Begrenzungsmittel einen von einem elektromechanischen Aktuator (30) betätigbaren Anschlagkörper (27) umfasst.

5. Vorrichtung nach einem der vorhergehenden Ansprüche, **dadurch gekennzeichnet, dass** die Dämpfungsventilanordnung (12) außerhalb des Gehäuses (2) angeordnet ist.

6. Vorrichtung nach einem der vorhergehenden Ansprüche, **dadurch gekennzeichnet, dass** die Dämpfungsventilanordnung (12) über Hydraulikleitungen (10, 11) mit den Volumina (4, 5) des Stoßdämpfers verbunden ist.

7. Vorrichtung nach einem der vorhergehenden Ansprüche, **dadurch gekennzeichnet, dass** insgesamt zwei Dämpfungsventilanordnungen (12) vorgesehen sind, die hydraulisch parallel und strömungsmäßig gegensinnig angeordnet sind.

8. Vorrichtung nach einem der vorhergehenden Ansprüche, **dadurch gekennzeichnet, dass** der Kolben (3) eine Bypassbohrung zur hydraulischen Verbindung der Volumina (4, 5) ohne Ventilmittel aufweist.

9. Vorrichtung nach einem der vorhergehenden Ansprüche, **dadurch gekennzeichnet, dass** die Dämpfungsventilanordnung (12) im wesentlichen rotationssymmetrisch aufgebaut ist und dass das Rohr (22) mit der Symmetrieachse koaxial angeordnet ist.

10. Vorrichtung nach einem der vorhergehenden Ansprüche, **dadurch gekennzeichnet, dass** das bewegliche Ventilglied (21) von wenigstens einer Federplatte gebildet ist.

11. Vorrichtung nach einem der vorhergehenden Ansprüche, **dadurch gekennzeichnet, dass** der Kolben (24) einen größeren Durchmesser aufweist als der Ventilsitz (20).

12. Vorrichtung nach einem der vorhergehenden Ansprüche, **dadurch gekennzeichnet, dass** die Dämpfungsventilanordnung (12) eine Kühlvorrichtung trägt.

13. Vorrichtung nach einem der vorhergehenden Ansprüche, **dadurch gekennzeichnet, dass** der Anschlagkörper (27) derart ausgebildet ist, dass er mit dem Rohr (22) als Dämpfungsventil zusammenwirkt.

## Claims

1. Vibration absorber
- having a cylindrical housing (2) and a piston (3) which is displaceable in the housing (2), the housing (2) and the piston (3) each being provided with securing means (6, 8), and the piston (3) being inserted in a sealing manner in the housing (2) and delimiting a first volume (4) and a second volume (5), and
- having at least one damping valve arrangement (12), which, in a valve housing (13), comprises a first working chamber (15) hydraulically communicating with the second volume (5) and a second working chamber (16) communicating with the first volume (4) as well as a damping valve (20, 21) fluidly arranged between the first working chamber (15) and the second working chamber (16), where in the damping valve (20, 21) comprising a valve seat (20) and a movable valve member (21), which influences the hydraulic flow from the first working chamber (15) into the second working chamber (16), **characterised in that** the first working chamber (15) is delimited by a piston (24) which is displaceably mounted in the valve housing (13), which piston (24) delimits with the valve housing (13) an auxiliary chamber (26) which is hydraulically separated from the first working chamber (15) and hydraulically connected to the second working chamber (16) and which piston (24) is connected to the valve member (21) in order to urge the valve member (21) in the direction of the valve seat (20) if the pressure in the first working chamber (15) is greater than the pressure in the second working chamber (16).

2. Device according to Claim 1, **characterised in that** the piston (24) has a pipe (22) which represents a hydraulic connection between the auxiliary chamber (26) and the second working chamber (16) and which is configured to transfer a tensile force to the valve member (21).

3. Device according to any one of the preceding claims, **characterised in that** the stroke of the piston (24) is delimited by adjustable limiting means (27, 28).

4. Device according to any one of the preceding claims, **characterised in that** at least one limiting means comprises a stop body (27) which can be operated by an electromechanical actuator (30).

5. Device according to any one of the preceding claims, **characterised in that** the damping valve arrangement (12) is arranged outside the housing (2).

6. Device according to any one of the preceding claims, **characterised in that** the damping valve arrangement (12) is connected to the volumes (4, 5) of the shock absorber via hydraulic lines (10, 11).

7. Device according to any one of the preceding claims, **characterised in that** two damping valve arrangements (12) are provided in total, which are arranged hydraulically parallel and fluidly inverse.

8. Device according to any one of the preceding claims, **characterised in that** the piston (3) has a bypass hole for hydraulically connecting the volumes (4, 5) without valve means.

9. Device according to any one of the preceding claims, **characterised in that** the damping valve arrangement (12) is constructed substantially rotationally symmetrically and **in that** the pipe (22) is coaxially arranged with the symmetrical axis.

10. Device according to any one of the preceding claims, **characterised in that** the movable valve member (21) is formed by at least one spring plate.

11. Device according to any one of the preceding claims, **characterised in that** the piston (24) has a greater diameter than the valve seat (20).

12. Device according to any one of the preceding claims, **characterised in that** the damping valve arrangement (12) has a cooling device.

13. Device according to any one of the preceding claims, **characterised in that** the stop body (27) is designed in such a way that it cooperates with the pipe (22) as damping valve.

## Revendications

1. Amortisseur comprenant
- un carter cylindrique (2) et un piston (3) pouvant coulisser dans le carter (2), le carter (2) et le piston (3) étant pourvus chacun de moyens de fixation (6, 8), et le piston (3) étant monté de manière étanche dans le carter (2) et délimitant un premier volume (4) et un deuxième volume (5), et
- au moins un agencement de valve d'amortissement (12), qui englobe, dans un carter de valve (13), une première chambre de travail (15) en communication hydraulique avec le deuxième volume (5), et une deuxième chambre de travail (16) en communication hydraulique avec le premier volume (4), ainsi qu'une valve d'amortissement (20, 21) agencée, sur le plan de l'écoulement des fluides, entre la première chambre de travail (15) et la deuxième chambre de travail (16), la valve d'amortissement (20, 21) comprenant un siège de valve (20) et un organe d'obturation de valve (21) mobile, qui influence l'écoulement hydraulique de la première chambre de travail (15) à la deuxième chambre de travail (16),
**caractérisé en ce que** la première chambre de travail (15) est délimitée par un piston (24), qui est monté coulissant dans le carter de valve (13) et délimite, avec le carter de valve (13), une chambre auxiliaire (26) isolée hydrauliquement de la première chambre de travail (15) et reliée hydrauliquement avec la deuxième chambre de travail (16), et qui est relié à l'organe d'obturation de valve (21) pour repousser l'organe d'obturation de valve (21) en direction du siège de valve (20) lorsque la pression dans la première chambre de travail (15) est plus grande que la pression dans la deuxième chambre de travail (16).

2. Dispositif selon la revendication 1, **caractérisé en ce que** le piston (24) porte un tube (22), qui constitue une liaison hydraulique de la chambre auxiliaire (26) avec la deuxième chambre de travail (16), et qui est conçu pour transmettre une force de traction à l'organe d'obturation de valve (21).

3. Dispositif selon l'une des revendications précédentes, **caractérisé en ce que** la course du piston (24) est limitée par des moyens de limitation (27, 28) réglables.

4. Dispositif selon l'une des revendications précédentes, **caractérisé en ce qu'**au moins un moyen de limitation comprend un corps de butée (27) pouvant être actionné par un actionneur électromécanique (30).

5. Dispositif selon l'une des revendications précédentes, **caractérisé en ce que** l'agencement de valve d'amortissement (12) est agencé en-dehors du carter (2).

6. Dispositif selon l'une des revendications précédentes, **caractérisé en ce que** l'agencement de valve d'amortissement (12) est relié, par l'intermédiaire de conduites hydrauliques (10, 11), aux volumes (4, 5) de l'amortisseur.

7. Dispositif selon l'une des revendications précédentes, **caractérisé en ce que** sont prévus, au total, deux agencements de valve d'amortissement (12), qui sont montés hydrauliquement en parallèle, et en opposition sur le plan du sens d'écoulement.

8. Dispositif selon l'une des revendications précédentes, **caractérisé en ce que** le piston (3) présente un alésage de dérivation pour assurer une liaison hydraulique des volumes (4, 5), sans moyens de valve.

9. Dispositif selon l'une des revendications précédentes, **caractérisé en ce que** l'agencement de valve d'amortissement (12) est d'une construction sensiblement à symétrie de rotation, et **en ce que** le tube (22) est agencé coaxialement à l'axe de symétrie.

10. Dispositif selon l'une des revendications précédentes, **caractérisé en ce que** l'organe d'obturation de valve (21) mobile est formé par au moins une plaque de ressort.

11. Dispositif selon l'une des revendications précédentes, **caractérisé en ce que** le piston (24) présente un diamètre plus grand que le siège de valve (20).

12. Dispositif selon l'une des revendications précédentes, **caractérisé en ce que** l'agencement de valve d'amortissement (12) porte un dispositif de refroidissement.

13. Dispositif selon l'une des revendications précédentes, **caractérisé en ce que** le corps de butée (27) est réalisé de manière à qu'il interagisse avec le tube (22), comme valve d'amortissement.
